# EUROPEAN PATENT APPLICATION

(11) **EP 4 632 510 A1**
(43) Date of publication of application: **15.10.2025**
(21) Application number: 25164473.8
(22) Date of filing: 18.03.2025
(51) Int. Cl.: G05B 19/042, B60W 50/00

(54) **STANDARD CONTROLLER AND CONTROLLER SYSTEM INCLUDING THE SAME**

(30) Priority: 19.03.2024 KR 20240037953; 23.08.2024 KR 20240113332
(71) Applicant: Hyundai Mobis Co., Ltd., Gangnam-gu Seoul 06141 (KR)
(72) Inventor: CHANG, Jae Ho, 16891 Yongin-si, Gyeonggi-do (KR); KWACK, Ki Tae, 16891 Yongin-si, Gyeonggi-do (KR)
(74) Representative: Jung, Minkyu

(57) **Abstract**

Disclosed is a control system of device having mobility, the control system including standard controllers, each configured to be installed in one of a plurality of areas of the device, detect an input for a function related to a component connected thereto, generate or transmit an input control signal related to the detected input, detect an output control signal related to an output for the function related to the component connected thereto, and perform a control related to the output control signal, a central computer configured to define the function and determine linkage between the input and the output to generate the output control signal related to the input control signal for the function, and a gateway controller configured to transmit the input control signal and the output control signal between each of the standard controllers and the central computer.

## Description

### BACKGROUND OF THE DISCLOSURE

### Field of the Disclosure

The present disclosure relates to a standard controller and control system including the same, and more particularly, to an electric and electronic platform of a vehicle including a standard controller, and furthermore particularly, to a standard controller, a control system including the same, and an inter-component connection structure.

### Discussion of the Related Art

In the related art, when designing a vehicle signal input/output circuit, input/output specifications of a counterpart to which a wiring harness is connected are checked, and an optimized circuit suitable for the specifications is constructed with a slight margin. In this case, when the number of vehicle signal inputs and outputs used by a controller is small, there is an advantage such as material cost reduction, and the like, but when the number of vehicle inputs and outputs used by the controller is large, the time taken to implement each circuit configuration and software logic is disadvantageously increased, which requires a lot of development cost.

Moreover, it was very difficult to use the previously configured circuit equally for other components due to the optimization design, and there were disadvantages such as adding a new signal, developing a new controller itself for a change, and the like, as circuit modifications such as a small RC time constant change, a large IC change and the like were required.

In addition, an in-vehicle controller and components (sensor/actuator) are connected on a functional basis and the in-vehicle controller is designed to have a structure separate from other controllers with different functions. As a result, a signal of a component (or part) connected to one controller could not be used by another controller. In addition, even when a controller and a component are far away from each other in order to operate as a single function, a direct connection of wires for signal transmission was required, which contributed to increasing the length/weight of a wiring harness in a vehicle. Additionally, as signals such as ACC, IGN, and the like commonly used by various controllers were not shared with each other, the length/weight of the wiring harness was likewise increased.

Accordingly, an electrical and electronic architecture was proposed, whereby it was possible to design more flexible and efficient in-vehicle controllers and related wires.

The present proposal is not limited to this, but intends to propose a controller and connection structure thereof that allow parts or functions to be added or changed only by updating software to provide flexibility such as adding vehicle parts or changing vehicle functions, etc.

### SUMMARY OF THE DISCLOSURE

According to the above-mentioned background, one object of the present disclosure is to provide a standard controller, a control system including the same, and an inter-component connection structure therein.

In addition, another object of the present disclosure is to provide a standard controller, a control system including the same, and an inter-component connection structure therein for controlling not only a vehicle but also a device with mobility. In some embodiments, the device with mobility may refer to any devices that are designed to be portable, flexible, or able to move from place to place. In some embodiments, the device with mobility includes, but is not limited to, smartphones, laptops, electric scooters/bikes, robotic vacuum cleaners, drones, portable speakers, wheelchairs, mobile medical equipment, etc.

Technical tasks obtainable from the present disclosure are non-limited by the above-mentioned technical tasks. And, other unmentioned technical tasks can be clearly understood from the following description by those having ordinary skill in the technical field to which the present disclosure pertains.

Additional advantages, objects, and features of the disclosure will be set forth in the disclosure herein as well as the accompanying drawings. Such aspects may also be appreciated by those skilled in the art based on the disclosure herein.

To achieve these objects and other advantages, in one technical aspect of the present disclosure, provided is a control system of a device having mobility, the control system including standard controllers, each configured to be installed in one of a plurality of areas of the device, detect an input for a function related to a component connected thereto, generate or transmit an input control signal related to the detected input, detect an output control signal corresponding to an output for the function related to the component connected thereto, and perform control corresponding to the output control signal, a central computer configured to define the function and determine linkage between the input and the output to generate the output control signal corresponding to the input control signal for the function, and a gateway controller configured to transfer the input control signal and the output control signal between each of the standard controllers and the central computer.

In another technical aspect of the present disclosure, provided is a standard controller device installed in one of a plurality of areas in a device, the standard controller device including a transceiver configured to transceive a signal with a gateway controller or a central computer and a controller configured to process the transceived signal, the controller further configured to detect an input for a function related to a component connected thereto and generate or transmit an input control signal corresponding to the detected input, detect an output control signal corresponding to an output for the function related to the component connected thereto, and perform a control corresponding to the output control signal, wherein the output control signal may be generated by the central computer according to an input for a function related to a component connected to a third standard controller communicatively connected to the gateway controller and received by the gateway controller.

The above-described solutions of the present disclosure are some of the embodiments of the present disclosure. Various solutions other than the solutions of the above-described tasks may be derived and understood based on the detailed description of the present disclosure to be described below.

Accordingly, the present disclosure has the following effects.

By disposing a standard controller in a plurality of areas in a device, length and weight of a wiring harness may be reduced.

In a three-layer structure consisting of a standard controller, a central control unit (gateway controller), and a central computer (or vehicle computer), as the standard controller and of which parts are directly connected are separated from the central computer, each role is distributed, thereby being capable of responding flexibly to component (or part) updates or function updates.

Effects obtainable from the present disclosure may be non-limited by the above-mentioned effect. And, other unmentioned effects can be clearly understood from the following description by those having ordinary skill in the technical field to which the present disclosure pertains.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is an overall block diagram of an autonomous vehicle to which an autonomous driving device is applicable.
FIG. 2 is an exemplary diagram illustrating an example in which an autonomous driving device is applied to a vehicle.
FIG. 3 illustrates an in-vehicle control architecture according to the present disclosure.
FIG. 4 illustrates a signal and driving standardization for vehicle component driving according to the present disclosure.
FIG. 5 illustrates standardization of signals and interfaces for communication and sound for vehicle components according to the present disclosure.
FIG. 6 illustrates a connection structure between a standard controller and a component according to the present disclosure.
FIG. 7 illustrates a connection structure between a standard controller, a gateway controller, and a vehicle computer according to the present disclosure.
FIG. 8 illustrates a detailed configuration of a standard controller according to the present disclosure, a connection structure between the standard controller and a component, and a connection structure between the standard controller, a gateway controller, and a vehicle computer.
FIG. 9 illustrates a signal DB and a connection structure between a standard controller and a component depending thereon according to the present disclosure.
FIG. 10 is a diagram for describing a change of a connection between a standard controller and a component or dual connection according to the present disclosure.
FIG. 11 illustrates a connection structure between a standard controller and a vehicle computer for adding a new function using a component according to the present disclosure.
FIG. 12 is a diagram for describing implementation of functions using a standard controller according to the present disclosure.
FIG. 13 is a diagram for describing implementation of functions using a standard controller according to the present disclosure.
FIG. 14 illustrates a connection structure between a standard controller, a gateway controller, and a vehicle computer according to the present disclosure.
FIG. 15 illustrates a connection structure for describing a function using a component according to the present disclosure.
FIG. 16 illustrates a software structure for a vehicle control system according to the present disclosure.
FIG. 17 is a block diagram illustrating a standard controller according to the present disclosure.

### DETAILED DESCRIPTION OF THE DISCLOSURE

The embodiments of the present invention will be described below with reference to the accompanying drawings.

The embodiments described below are provided to aid in the understanding of the present invention and are not intended to limit the invention to the embodiments described herein. Additionally, in the accompanying drawings, certain components may be exaggerated or reduced in size for clarity. The present invention is not limited to the shapes depicted in the accompanying drawings.

In the specification, when a part "includes" an element, it means that the part may further include another element rather than excluding another element unless otherwise mentioned.

Additionally, in the specification, terms such as "passenger," "driver," and "user" are mentioned for the purpose of explaining the invention, and it should be noted that these terms may be used interchangeably.

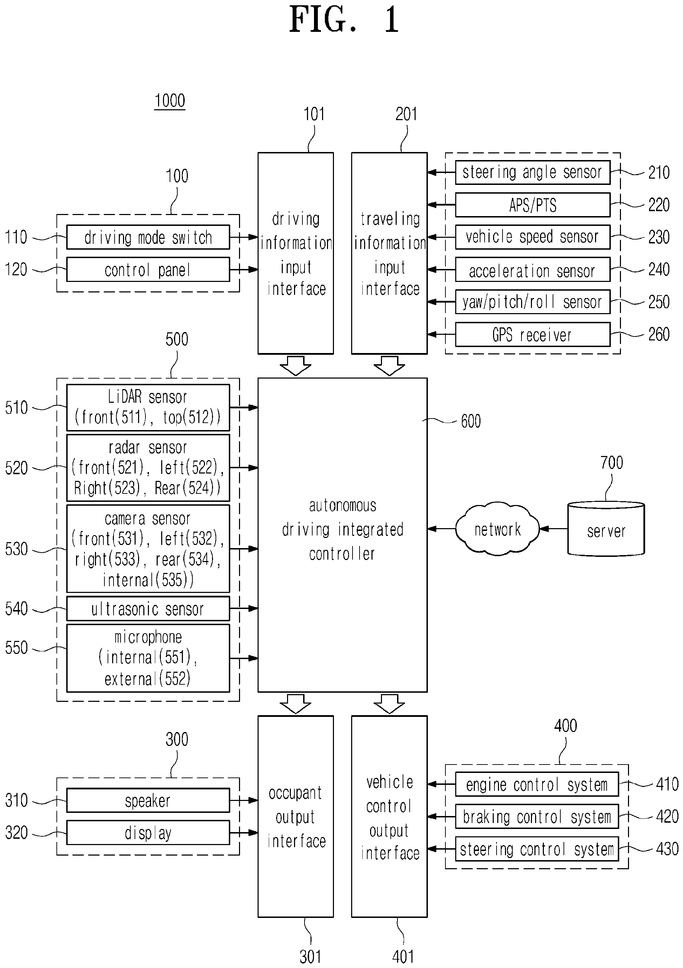

FIG. 1 is an overall block diagram of an autonomous driving control system to which an autonomous driving apparatus according to any one of embodiments of the present disclosure is applicable.

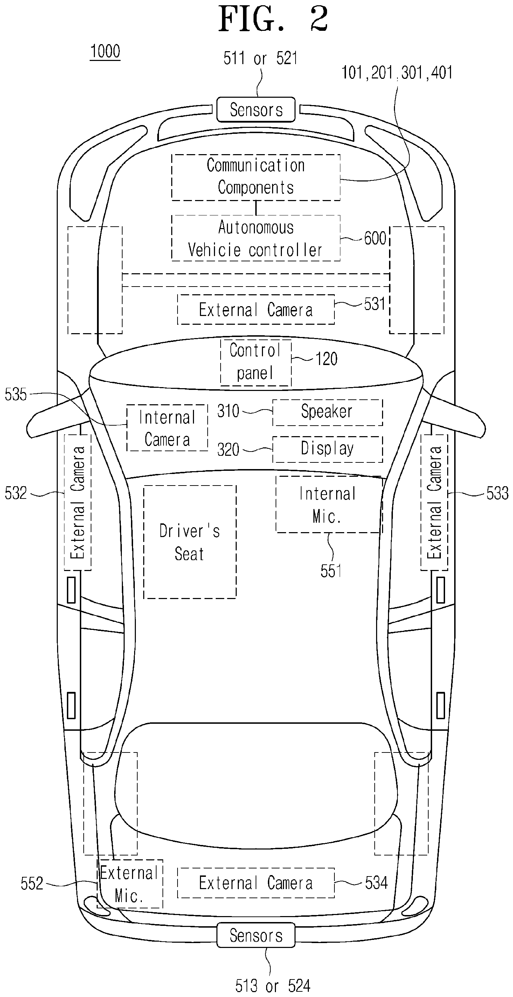

FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

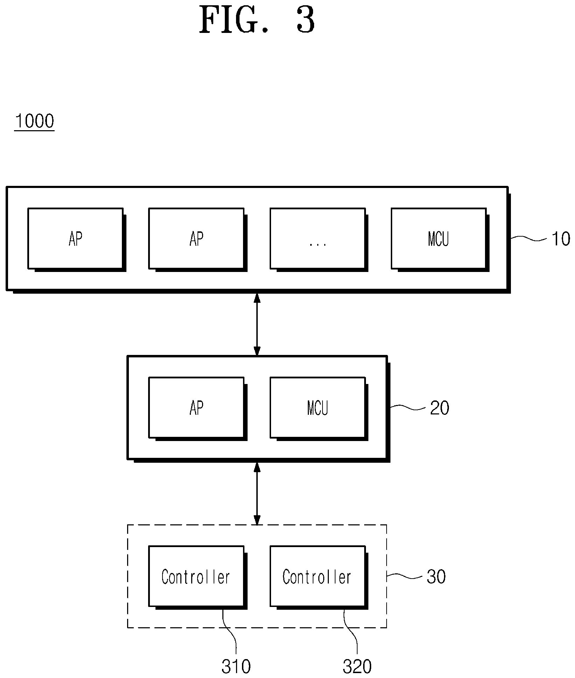

FIG. 3 shows the architecture of an in-vehicle control system according to the present disclosure. A vehicle control system consists of a Vehicle Computer (VC) 10, a gateway controller (or a central communication unit) 20, and standard controllers 30.

However, in FIGS. 3 to 17 and related descriptions below, the vehicle control system may be applied to a control system for a mobility device such as a robot, an unmanned aerial vehicle, an autonomous driving device, and the like. Therefore, names specified for vehicles, such as a vehicle computer, a vehicle control system, and the like, are only names and will not limit the scope of the present disclosure. For example, the vehicle computer may be referred to as a central computer, and the vehicle control system may be referred to as a device control system or the like.

The standard controllers 30 are configured to control a component (e.g., actuator or sensor) connected to each of them, and a plurality of the standard controllers may be configured to cooperate to provide one function or to perform control for providing the function.

In the present specification, a function refers to an operation that may be implemented with a component, defined as an input (control) signal and an output (control) signal. An input control signal and an output control signal may be linked together according to a function. That is, at least one input control signal and at least one output control signal corresponding thereto may configure one function.

For example, when a vehicle's emergency light button is pressed, an input control signal is a signal corresponding to the pressing of the emergency light button, and an output control signal is a signal corresponding to a driving signal to turn on the emergency light.

Additionally, each of the standard controllers 30 is installed or located in any of a plurality of areas of the vehicle, and the standard controllers in different areas may transmit and receive signals to and from each other through the gateway controller 20 or the vehicle computer 10.

More specifically, an input control signal generated from the standard controller 310 may be transmitted to the vehicle computer 10 through the gateway controller 20, and the vehicle computer 10 may generate an output control signal corresponding to the input control signal and transmit it the standard controller 320 through the gateway controller 20. The output control signal may include information for activating an individual function (or operation) of a component connected to the standard controller 320. Accordingly, the standard controller 320 may activate4e the corresponding component using the output control signal.

The present disclosure classifies input and output signals and power for component control to provide addition and change of a component or addition or change of a function related to the component, and configures each classified signal group to operate according to standardized circuits and software.

For example, output signals are classified into two categories: a high current output and a low current output, and all input signals may be classified into one.

Hereinafter, examples of classification of signals, driving, interfaces, and the like according to the present disclosure will be described, and in the present disclosure, other classifications are also possible in addition to the following classifications.

In addition, in the present specification, software or SW corresponds to a logic that performs a specific operation or function, and may mean a function that may be performed by a controller or processor. Thus, in the present specification, software or SW may also be referred to as another name, by which the scope of rights thereof is non-limited.

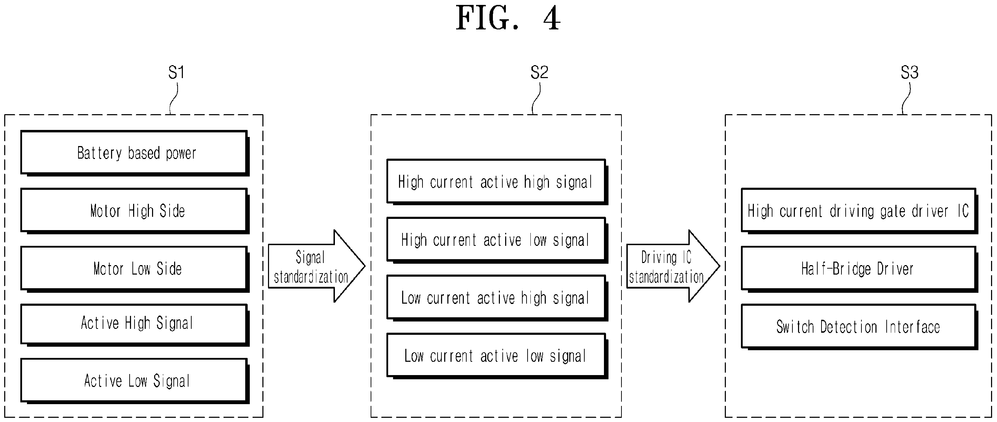

FIG. 4 illustrates a signal and driving standardization for driving a component according to the present disclosure.

S1 represents some of signals used in existing vehicles. In this proposal, signals used in the existing vehicles are standardized and classified to distinguish between high current active high/low signals and low current active high/low signals and output signals (S2). Furthermore, based on the input/output signals S2, a driver or a switch detection interface corresponding thereto is classified (S3).

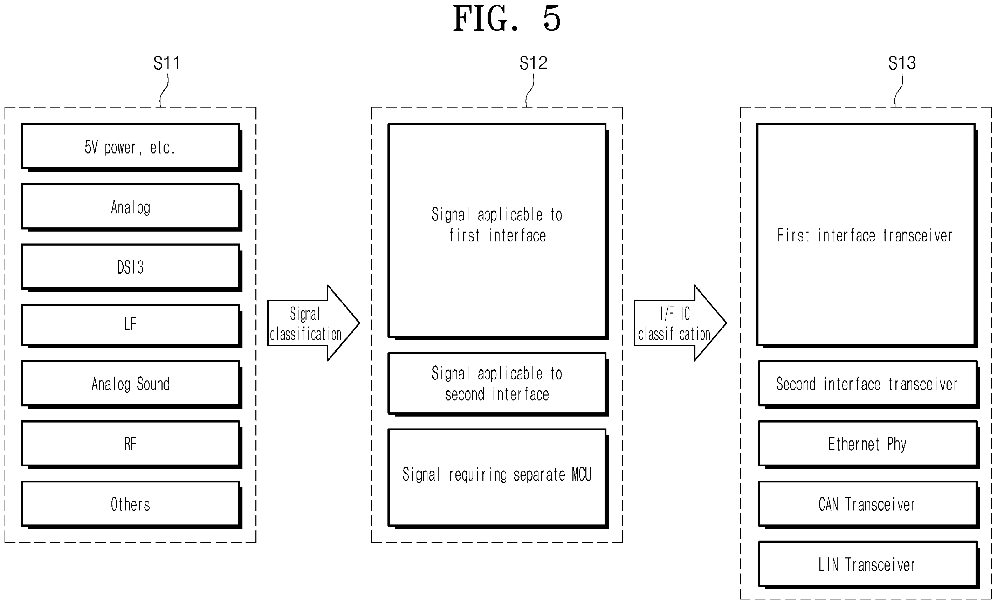

FIG. 5 illustrates standardization of a signal and an interface for communication and sound for a component according to the present disclosure.

Power, sound, and wireless signal S11 are classified into a signal applicable to a first interface, a signal applicable to a second interface, and a signal requiring a separate Micro Controller Unit (MCU) (S12), and they are again classified into a transceiver for the first interface, a transceiver for the second interface, Ethernet, a CAN transceiver, a LIN transceiver, etc. (S13).

In the present disclosure, Ethernet, CAN, and LIN interfaces for in-vehicle communication are used in the same manner as before.

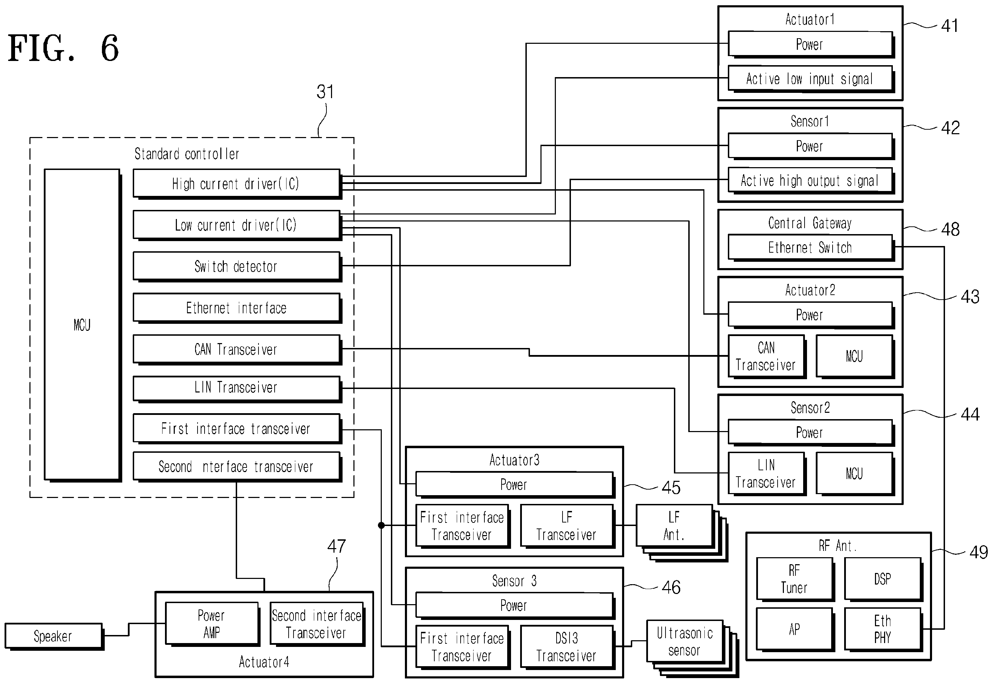

FIG. 6 illustrates a connection structure between a standard controller and a component according to the present disclosure.

According to the above-described classification of signals, driving, and interfaces, the configuration of a standard controller 31 is proposed.

The standard controller 31 may include an MCU, a high current driver, a low current driver, a switch detector, an Ethernet interface, a Controller Area Network (CAN) transceiver, a Local Interconnect Network (LIN) transceiver, a transceiver for a first interface, and a transceiver for a second interface.

The MCU may receive or detect a control signal or generate/transmit a control signal to provide the aforementioned function. The MCU may configure a channel register of a driver or switch detector matching each connector according to a desired control signal based on the structure or information (hereinafter, referred to as a signal database or a signal DB) of a signal and the like related to each connector, stored in a memory. Furthermore, the MCU may receive a control signal from an actuator or sensor connected to the standard controller 31, or transmit a control signal to the actuator or sensor.

In addition, the MCU may control a power block according to an operation mode (e.g., normal, sleep, etc.) and control a communication block for communication with other standard controllers.

The high current driver IC is an IC capable of outputting a high current, and may include a plurality of channels for output. The high current driver has a register area for setting detailed specifications of a signal for each output channel, and may be able to set up a register through SPI I/F or the like in the MCU. Through this, it is able to control a function to be provided by the corresponding signal by setting a register of a channel that matches a signal connected to a connector.

The low current driver IC is an IC capable of outputting a low current, and may include a plurality of channels for output. The low current driver has a register area for setting detailed specifications of a signal for each output channel, and may be able to set up a register through SPI I/F or the like in the MCU. Through this, it is able to control a function to be provided by the corresponding signal by setting a register of a channel matching a signal connected to a connector.

The switch detector is an IC capable of detecting a change in an input signal and may include a plurality of channels for input. The switch detector includes a register area for setting detailed specifications of a signal for each input channel, and may be able to set up a register through SPI I/F or the like in the MCU. Through this, it is able to control a function to be provided by the corresponding signal by setting a register of a channel matching a signal connected to a connector.

The Ethernet interface is a communication interface that supports the Ethernet protocol, the CAN transceiver is a communication interface that supports CAN communication, the LIN transceiver is a communication interface that supports LIN communication, the transceiver for the first interface is a communication interface that supports the first interface communication, and the transceiver for the second interface is a communication interface that supports the second interface communication.

The standard controller 31 may be connected to actuators 41, 43, 45, and 47, sensors 42, 44, and 46, a central gateway 48, and an RF antenna 49.

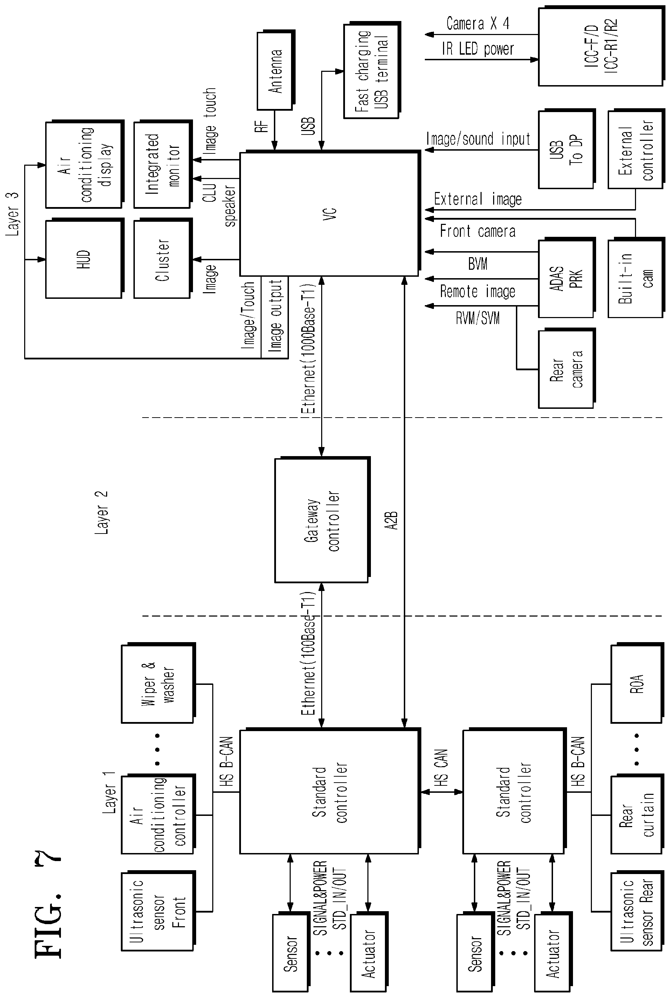

FIG. 7 illustrates a connection structure between a standard controller, a gateway controller, and a vehicle computer according to the present disclosure.

The present disclosure proposes a three-layer structure consisting of a plurality of standard controllers, a gateway controller (or central communication unit), and a Vehicle Computer (VC).

A plurality of the standard controllers constitute Layer 1, the gateway controller constitutes Layer 2, and the vehicle computer constitutes Layer 3.

Each of the layers may be connected by an Ethernet interface, and the standard controllers may be connected one another by a CAN or Ethernet interface.

As illustrated in FIG. 7, the standard controller is connected to a component, and the present disclosure proposes a vehicle control system with a three-layer structure to provide a function linked to the component, and a signal structure and a signal processing logic accordingly.

A signal DB proposed according to the present disclosure may include the following parameters.

**[Table 1]**

| **Classific ation** | **Parameters** | **Description** |
|---|---|---|
| Full | signal ID(SIG_ID) | Parameter indicating an identifier assigned for each signal |
| Full | Signal classification 1(CAT_1) | Signal classification parameter. Information such as what type of IC to be allocated is included. Indicates any one of an input IC, a low current output/driving IC, and a high current output/driving IC. |
| Full | Signal classification 2(CAT_2) | Signal sub-classification parameter. Includes specification information such as Active High/Low, analog signal, etc. |
| Full | Standard controller information (SC) | Indicates to which standard controller a signal is assigned. |
| Full | IC classification | Parameter that defines to which IC a signal is connected. Indicates the number or identifier of the IC |
| Full | PIN classification | Parameter that defines to which PIN a signal is connected. Indicates the PIN number |
| Output | # of PINs (USED) | Parameter that defines how many PINs are used by a signal |
| Output | Max. operating current (MOC) | Parameter used when the maximum operating current classification is required in case of a power signal |
| Output | Overcurrent protection function (OCP) | Parameter that defines whether the output overcurrent protection (OCP) function is needed and at what output current the OCP function will operate |
| Full | Real-time need (RT) | Parameter that defines whether a signal requires transmission and reception in Real Time |
| Full | PWM | Parameter that defines whether a signal needs PWM output |
| Output | OLD | Parameter that defines whether a signal needs Open Load Detection function |
| Output | PWM_F | Parameter that defines a PWM frequency of a signal |
| Output | CT (charging time) | Inrush current may be generated at minimum application of a power signal. Parameter that indicates how long to perform a charging operation if the charging operation capable of reducing Inrush Current is needed. |
| Output | SR | Parameter that defines a slew rate of a signal |
| Output | DEF_V | Parameter that defines a default value of a signal |
| Full | PRE_Value | Reserved parameter |
| Input | WC | Parameter that defines a wetting current of a signal |
| Input | Threshold_V | Parameter that defines a threshold voltage value for detecting a state change of an input signal |
| Output | PWM_Duty | Parameter that defines default duty of a PWM output signal |

In the above table, "classification" indicates whether a corresponding parameter is used in an input signal, an output signal, or both input and output signals. Although not shown in Table 1, each parameter may be set to have a value of a prescribed length, and such a signal DB may be stored in a memory of each standard controller. Preferably, the standard controller may store a signal DB related to a component (e.g., a sensor, an actuator, etc.) connected thereto in the memory. Accordingly, the signal DB may include a plurality of signals (see Table 2 to be described later for example), and a value of an individual parameter may be set for each signal. The signal DB may be modified, added, or deleted according to a function update to be provided.

In addition, referring to Table 1, each parameter of a signal DB has no description about any function related to a component. That is, each signal in the signal DB only represents a physical signal, which is used for register setting of a high current/low current driver for a component and the like or to state value detection of a switch detector, etc. In this case, it does not include a limitation or indication of what function the signal in the signal DB provides using the component. Accordingly, it is impossible to recognize a function using a component from the standpoint of a standard controller, and only an input control signal or an output control signal for that is processed.

On the contrary, the Vehicle Computer (VC) may define and store a function in which a function SW (software), which will be described later, uses a component through linkage of a plurality of signals. Data in which such a function is defined is referred to as a function database. However, a connection SW of the VC may recognize or interpret an individual function from a signal ID received from the standard controller, but does not know an individual function connected thereto. The connection SW may transmit, to a function SW, that a signal related to an individual function according to the received signal ID or supporting the individual function has been received, and receive a linked individual function I in response thereto. The function SW may reply to the connection SW with an individual function corresponding to an output corresponding to an individual function serving as an input. The connection SW may obtain a signal ID and/or a state value thereof for the linked individual function, and allow the obtained signal ID and/or the obtained state value to be transmitted to all the standard controllers.

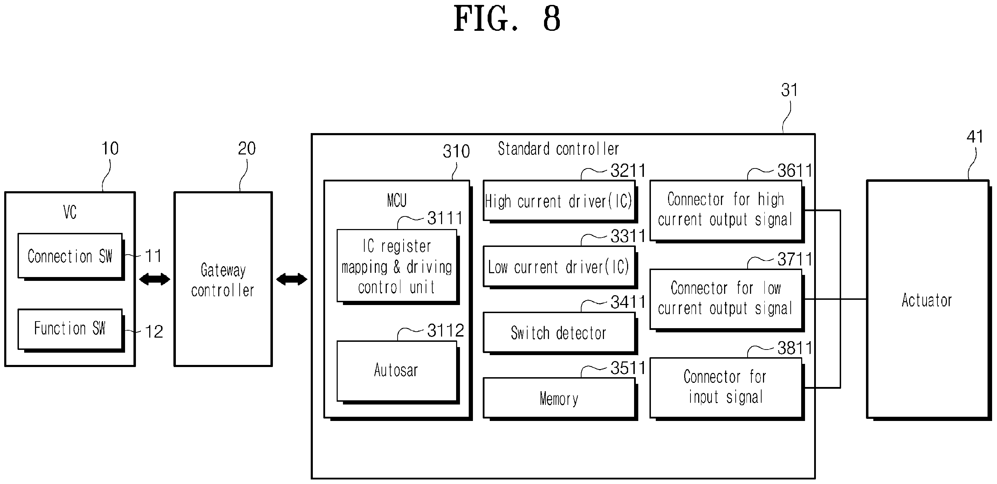

FIG. 8 shows a detailed configuration of a standard controller according to the present disclosure, a connection structure between a standard controller and a component, and a connection structure between a standard controller, a gateway controller, and a vehicle computer.

In FIG. 8, a configuration not shown in FIG. 6 is added and the configuration shown in FIG. 6 is omitted, by which the present disclosure is non-limited.

A standard controller 31 includes an MCU 310, and the MCU 310 includes an IC register mapping and driving control unit 3111 and an AUTomotive Open System ARchitecture (AUTOSAR) standard platform 3112.

Moreover, the standard controller 31 may include a high current driver (IC) 3211, a low current driver (IC) 3311, a switch detector 3411, and a memory 3511. Furthermore, the standard controller 31 may include a connector 3611 for a high current output signal connected to the high current driver, a connector 3711 for a low current output signal connected to the low current driver, and a connector 3811 for an input signal connected to the switch detector for receiving an input of a signal from a vehicle component or the like. In particular, the memory 3511 may store a signal DB related to the aforementioned component (e.g., actuator 40) connected thereto.

In addition, the standard controller 31 may be connected to an actuator 41 through connectors 3611, 3711, and 3811.

Hereinafter, simply, the generation or configuration of an input or output control signal for the new actuator 41 and the processing or control of a signal for the corresponding function related to the actuator 41 will be described.

An input or output control signal for the actuator 41 may be generated according to the regulated specification of a signal DB and stored in the memory 3511. Furthermore, the function related to the actuator 41 is defined based on the input or output control signal for the actuator 41, and thus such information (i.e., a function database) may be stored in a storage medium such as a memory of a function SW 11 or a function SW of a VC 10.

The VC 10, which is a controller in which the function SW 11 is stored or located, supports a user to add, change, or delete desired functions. The VC 10 drives the function SW based on an input control signal of a component (sensor/actuator, etc.) received from the standard controller 31 and/or a state value thereof. Also, the VC 10 may transmit an output control signal obtained through the function SW to the standard controller. In this case, the input control signal or the output control signal may include a signal ID and/or a state value (or change of the state value) thereof. The signal ID should be in the signal DB stored in the memory of the standard controller related to the corresponding function or component.

The combined Information of the input or output control signal of the component (e.g., actuator or sensor) related to such a function will be referred to as "linkage" information in the present specification. In addition, linkage information may include a description of a corresponding function related to a component. An example of the linkage information is as follows.

### Linkage information 1: Function of flashing a warning lamp based on pressing a horn switch

**[Table 2]**

| SIG_ID | CAT_1 | CAT_2 | SC | IC | PIN | USED | OCP | RT | WC | Threshold_V |
|---|---|---|---|---|---|---|---|---|---|---|
| 0000 | Input | Active Low | Driver seat | 1 | 14 | - | - | O | 2mA | 2V |
| 0000 | | | | | | | | | | |
| 0011 | | | | | | | | | | |
| 0011 | | | | | | | | | | |
| 0000 | Output | Active High | Trunk | 1 | 1 | 3 | 3A | O | - | - |
| 0000 | | | | | | | | | | |
| 0111 | | | | | | | | | | |
| 0001 | | | | | | | | | | |

In Table 2, SIG_ID=0000001100111 indicates an input control signal indicating the pressing of a horn switch, and SIG_ID=00000000001110001 indicates an output control signal for activating flashing of a warning lamp on a trunk side. That is, each of the input control signal and the output control signal may correspond to or represent an individual function. Meanwhile, referring to the linkage information, a function of flashing a warning lamp on a trunk side based on pressing a horn switch is defined, and it may be understood that such a function is provided through an actuator connected to a specific IC and pin. That is, when an input control signal is generated or detected from a certain component (e.g., sensing information of a sensor or an input control signal according to generation of a button touch/press, etc.), it is possible to configure a series of linkage information for generating an output control signal for (another) component according to the input control signal and controlling the component accordingly.

The standard controller 31 may be connected to the actuator 41 according to the signal DB stored in the memory 3511. That is, it may be connected to a high current/low current driver, or a switch detector and a connector thereof according to IC and pin information indicated by an individual signal of the signal DB. When the standard controller 31 is rebooted, the IC register mapping and driving control unit 3111 may set up a register for the corresponding driver (and/or its pin) based on the signal DB. For example, when it is assumed that SIG_ID=0000 0011 0011 0011 of Table 2 is an output control signal for the actuator 41, the IC register mapping and driving control unit 3111 performs an operation of enabling a pin #14 of the driver IC #1, selecting a current source (CSO) because it is Active Low, and setting a wetting current and a threshold_V to 2mA and 2V, respectively.

When a detection corresponding to an input control signal is made from the actuator 41 (through a switch detector), the standard controller 31 may transmit a signal ID corresponding to the input control signal and a state value (e.g., "Low" or "Active") thereof or a change in the state value (e.g., a change from "High" to "Low" or from "Inactive" to "Active") to a side of the VC 10 through the gateway controller 20.

Thereafter, based on the signal ID of the received input control signal, the connection SW 11 of the VC 10 may identify whether the corresponding signal is a certain individual function (for example, pressing the horn switch), and may notify the related function SW 12 that the individual function has been triggered. In this case, when there are a plurality of function SWs supporting individual functions related to the input control signal, notification about the trigger of the individual functions may be transmitted to a plurality of the function SWs. To this end, the connection SW 11 should be aware of information on the individual function supported by each of the function SWs 12. The connection SW 11 may store the information on the function SW 12 and the individual function supported by the function SW in the memory and the like.

According to the trigger notification for the identified individual function, the function SW 12 may reply to the connection SW 11 again with an individual function (e.g., activation of flashing a warning lamp) in response to the identified function. The connection SW 11 may generate a signal ID corresponding to an output control signal for the individual function in response to the identified function and a state value (e.g., "Active") thereof and transmit the same to the standard controllers through the gateway controller 20.

Meanwhile, in the above description, it has been described that the VC 10 is divided into the connection SW 11 and the function SW 12, but the connection SW 11 and the function SW 12 may be integrated into one subject.

When the output control signal is received, each of the standard controllers may determine whether the output control signal is an output control signal related to a component connected thereto, based on the signal DB of the memory. The standard controllers may determine whether it is the signal related to the component connected thereto by using a signal ID of the received output control signal. That is, each of the standard controllers may find the same signal ID as the signal ID of the received output control signal in the signal DB stored in the memory, and may determine whether it is the signal connected to itself by referring to a standard controller information ("SC") parameter of the corresponding signal ID.

When it is an output control signal related to a component connected thereto (e.g., a warning lamp), the corresponding standard controller may set a signal indicated by the signal ID of the output control signal to an indicated state value. Each of the standard controllers finds the same signal ID as to the signal ID of the received output control signal in the signal DB stored in the memory, refer to the "CAT_2" parameter of the corresponding signal ID to determine whether an indicated state value 'Active' is High or Low, and set the corresponding signal to Active (High or Low) accordingly.

According to such a state value setting, an operation of an IC indicated by the output control signal or an actuator connected to a pin may be performed. Then, the standard controller may transmit or report to the side of the VC 10 side that the change of the state value according to the output control signal is completed.

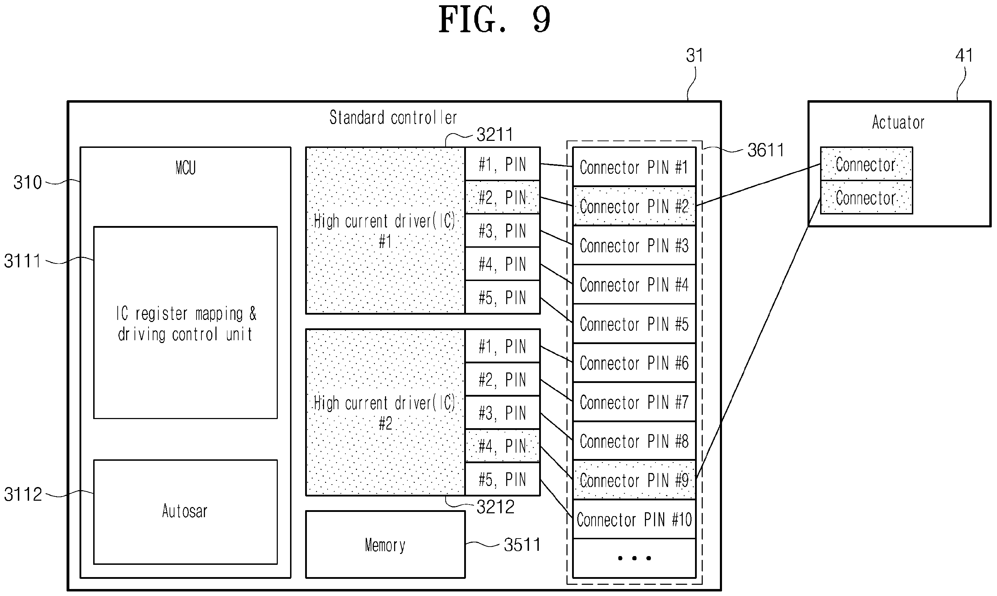

FIG. 9 illustrates a signal DB and a connection structure between a standard controller and a component depending thereon according to the present disclosure.

The following signal DB may be added or generated for an actuator connected to the standard controller 31.

**[Table 3]**

| SIG_ID | CAT_1 | CAT_2 | SC | IC | PIN | USED | OCP | RT | WC | Threshold_V |
|---|---|---|---|---|---|---|---|---|---|---|
| 0000 | Output | Active High | 1 | 1 | 2 | 1 | 3A | O | - | - |
| 0000 | | | | | | | | | | |
| 1011 | | | | | | | | | | |
| 0011 | | | | | | | | | | |
| 0000 | Output | Active High | 1 | 2 | 4 | 1 | 3A | O | - | - |
| 0000 | | | | | | | | | | |
| 1011 | | | | | | | | | | |
| 0011 | | | | | | | | | | |

It is assumed that the standard controller 31 of FIG. 9 is a standard controller 1 (SC=1). The above signal DB may be stored in a memory 3511 of the standard controller 31, and correspondingly, an actuator may be connected to a driver and a pin thereof. When the standard controller 31 is rebooted, register setting for each of the drivers (IC) 3211 and 3212 may be performed according to the signal DB.

Referring to FIG. 9, an actuator 41 is connected to PIN #2 of a high current driver #1, and the actuator 41 is connected to PIN # 4 of a high current driver #2.

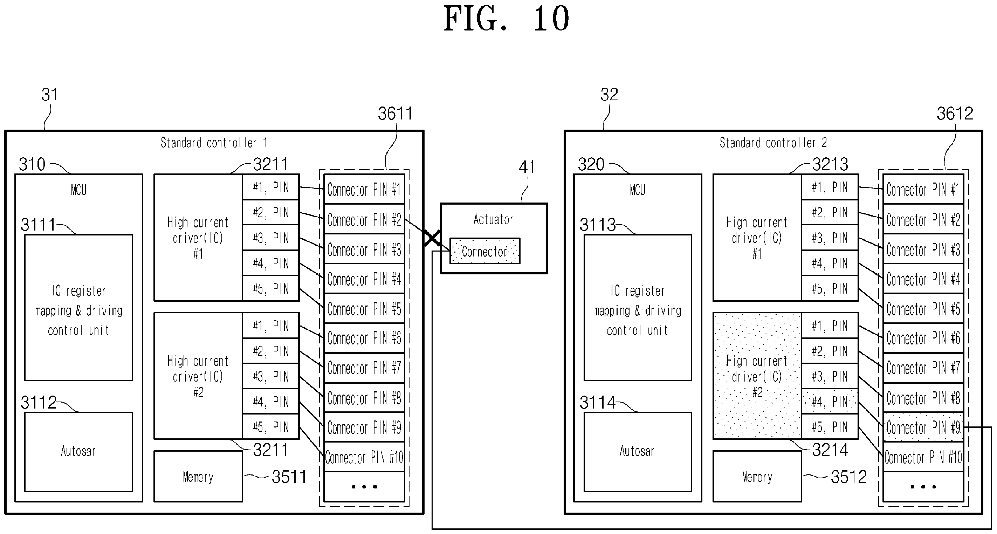

FIG. 10 is a diagram for describing a change of a connection between a standard controller and a component or a or dual connection according to the present disclosure.

It is described that an actuator 41 is disconnected from a standard controller 1 31 and changed to be connected to a standard controller 2 32 according to a change in a signal DB as follows.

Table 4 shows a signal DB before a change and Table 5 shows the signal DB after the change.

**[Table 4]**

| SIG_ID | CAT_1 | CAT_2 | SC | IC | PIN | USED | OCP | RT | WC | Threshold_V |
|---|---|---|---|---|---|---|---|---|---|---|
| 0000 | Output | Active High | 1 | 1 | 2 | 1 | 3A | O | - | - |
| 0000 | | | | | | | | | | |
| 1011 | | | | | | | | | | |
| 0011 | | | | | | | | | | |

**[Table 5]**

| SIG_ID | CAT_1 | CAT_2 | SC | IC | PIN | USED | OCP | RT | WC | Threshold_V |
|---|---|---|---|---|---|---|---|---|---|---|
| 0000 | Output | Active High | 2 | 2 | 4 | 1 | 3A | O | - | - |
| 0000 | | | | | | | | | | |
| 1011 | | | | | | | | | | |
| 0011 | | | | | | | | | | |

According to the change of the signal DB, the connection of the actuator 41 with the standard controller may be changed as illustrated in FIG. 10. That is, referring to Table 5, it may be confirmed that the actuator 41 is connected to PIN #4 of the driver (IC) #2 of the standard controller 2 32 (SC=2). Such actuator's movement between the standard controllers may be referred to as signal movement. Since only SC, IC, and pin information is changed and the remaining values are maintained as they are, it may be used to change a location of the actuator in a vehicle and the like.

On the other hand, referring to FIG. 10, it is also conceivable that the actuator 41 sets up a connection with the standard controller 2 32 without releasing the connection with the standard controller 1 31.

This is for functional safety purposes, and one actuator 41 is connected to the two standard controllers 31 and 32 at the same time, and the signal DB is configured in the same manner (SIG_ID is the same), so that even when a problem occurs in one connection, there is an advantage in that a corresponding function may be supported through the other connection. Accordingly, it is possible to configure a signal DB as follows.

**[Table 6]**

| SIG_ID | CAT_1 | CAT_2 | SC | IC | PIN | USED | OCP | RT | WC | Threshold_V |
|---|---|---|---|---|---|---|---|---|---|---|
| 0000 | Output | Active High | 1 | 1 | 2 | 1 | 3A | O | - | - |
| 0000 | | | | | | | | | | |
| 1011 | | | | | | | | | | |
| 0011 | | | | | | | | | | |
| 0000 | Output | Active High | 2 | 2 | 4 | 1 | 3A | O | - | - |
| 0000 | | | | | | | | | | |
| 1011 | | | | | | | | | | |
| 0011 | | | | | | | | | | |

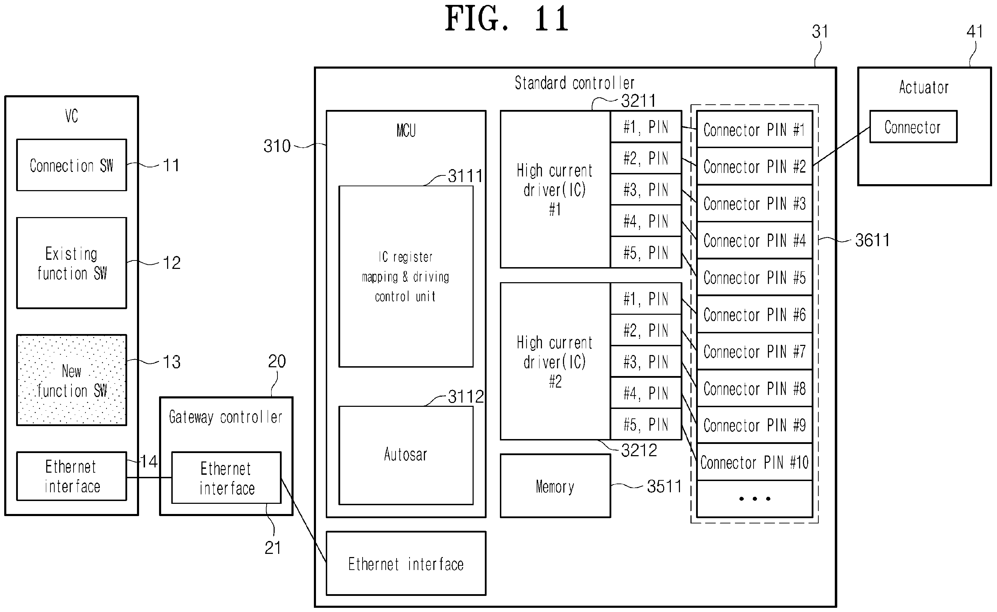

FIG. 11 illustrates a connection structure between a standard controller and a vehicle computer for adding a new function using a component according to the present disclosure.

FIG. 11 shows a case in which a new function SW 13 is added to a VC 10. The new function SW 13 stores a function associated with an actuator 41 and includes linkage information on an input control signal and an output control signal corresponding thereto.

The VC 10 may receive a signal ID and a state value (or a change in the state value) corresponding to a prescribed input control signal from a prescribed standard controller. The received signal ID and state value (or the change in the state value) may correspond to a function stored in the new function SW 13 or linkage information between an input control signal and an output control signal. Of course, the received signal ID and state value (or the change in the state value) may also correspond to a function stored in the existing function SW 12 or linkage information between an input control signal and an output control signal.

Accordingly, the VC 10 may generate an output control signal corresponding to the input control signal according to the existing function SW 12, the new function SW 13, or the linkage information stored therein.

For example, a case in which a function of linking the actuator 41 and a sensor (not shown) is added is considered. When the function of linking the actuator 41 and the sensor is not included in the function SW 12, the corresponding linking function may be added by the additional function SW 13. In advance, it is assumed that a signal related to an operation of the actuator 41 is predefined or stored in the signal database of the standard controller, and that an input signal related to the sensor is also predefined or stored in the signal database of the standard controller. In this case, since the signal for the actuator 41 and the sensor is defined in the signal database, an additional signal database update is not required.

Such an embodiment may allow a user to additionally add a function not provided by a manufacturer.

As described above, a new function related to a component may be additionally set by adding or changing a function SW of the VC 10.

In addition, through a trigger parameter of the signal DB, signals may be sequentially controlled without a function SW. (There is no need to limit the operation to the vehicle development stage because it may replace an existing fuse or relay operation).

**[Table 7]**

| SIG_ID | CAT_1 | CAT_2 | SC | IC | PIN | USED | OCP | Output trigger | Trigger ID | Trigger delay |
|---|---|---|---|---|---|---|---|---|---|---|
| 0000 | Output | Active High | 1 | 1 | 2 | 1 | 3A | Presence of trigger | 0000 0000 1011 XX00(ACC ) | 20ms |
| 0000 | | | | | | | | | | |
| 1011 | | | | | | | | | | |
| 00XX | | | | | | | | | | |

As shown in Table 7, when a trigger signal ID (0000 0000 1011 XX00) means an ACC signal, if the ACC is changed to an active state, the corresponding signal may be set to be changed to the active state after 20 ms. By using this function, functions that have been operated without a SW, such as a fuse or relay of an existing vehicle, may be replaced without a SW in the same manner.

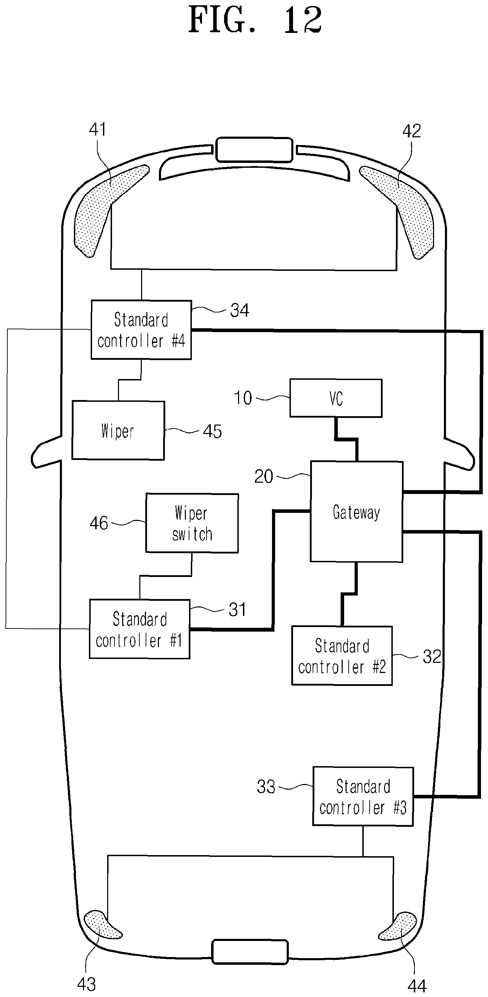

FIG. 12 is a diagram for describing implementation of a function using a standard controller according to the present disclosure.

FIG. 12 illustrates an example in which four standard controllers 31, 32, 33, and 34 are disposed in areas within a vehicle, respectively.

In advance, a signal DB for controlling a component is configured, and may be shared by all the standard controllers. However, each of the standard controllers may identify or recognize a signal DB for a component connected thereto.

[Wipe activation function according to a wiper switch]

A case in which a wiper activation function according to manipulation of a wiper switch 46 is defined in a function SW will be described.

A standard controller #1 31 may detect an ON signal from a wiper switch 46. The standard controller #1 31 may complete a register setting for determining an input of the wiper switch ON signal in a switch detector after booting, and may then determine a state value of the corresponding signal. Accordingly, the standard controller #1 31 may transmit a signal ID and a state value (or a change of the state value) not only to the VC 10 but also to all standard controllers 32, 33, and 34.

The VC 10 may identify which individual function (i.e., wiper switch manipulation) the received signal ID (and/or state value) indicates. Then, the VC 10 may recognize another individual function (e.g., output activation of a motor of a wiper 45) linked to the individual function. According to the former assumption, it may be stored in a function SW that a wiper activation function according to the manipulation of the wiper switch 46 is linked. In a further example, mapping information of mutually related signal IDs corresponding to a function (i.e., mapping between an ID of an input control signal and an ID of an output control signal) may also be stored in the function SW.

Accordingly, the VC 10 may generate a signal ID corresponding to another linked individual function and its state value (e.g., Active) and transmit them back to the standard controllers.

When there is information corresponding to the received signal ID in a signal DB of each of the standard controllers, each of the standard controllers may perform register setting of a related IC to output a state value of the corresponding signal ID as a received value. If there is no information corresponding to the received signal ID in its own signal DB, the standard controller may ignore the received signal ID (and/or state value).

In the illustrated example, since the standard controller #4 34 is connected to the wiper or the wiper motor 46, if the corresponding signal is already stored in a signal DB of a memory of the standard controller #4 34, the standard controller #4 34 may perform register setting of a related IC.

[Warning lamp output function according to a wiper switch]

Additionally, a case where a warning lamp flashing function according to manipulation of the wiper switch 46 is added to the function SW will be described.

The transmission of the signal ID and the state value according to the wiper switch ON to the VC 10 may refer to the above-described example.

The VC 10 may identify which individual function (i.e., wiper switch manipulation) the received signal ID (and/or state value) indicates. Then, the VC 10 may recognize another individual function (e.g., warning lamp output) linked to the former individual function.

Accordingly, the VC 10 may generate a signal ID corresponding to another linked individual function and a state value (e.g., Active) thereof and transmit them back to standard controllers.

When there is a signal corresponding to the received signal ID in a signal DB of its own, each of the standard controllers may perform register setting of an IC corresponding to the received signal ID to output a state value of the corresponding signal ID as a received value. If there is no information corresponding to the received signal ID in the signal DB of its own, the standard controller may ignore the received signal ID (and/or state value).

In the illustrated example, as the standard controller #3 33 and the standard controller #4 34 are connected to warning lamps 41, 42, 43, and 44, if the corresponding signal is stored in a signal DB of a memory of the standard controller #3 33 or the standard controller #4 34, the standard controller #3 or the standard controller #4 may perform register setting of a related IC.

Meanwhile, in the example described with reference to FIG. 12, the VC 10 identifies an individual function linked based on the received signal ID and/or state value, and generates and transmits a signal ID for the linked individual function and a state value thereof, which may be accompanied by an additional condition. That is, the VC 10 may determine a pre-condition in which the linked individual function may be executed. For example, when the linked individual function is a warning lamp output function, the VC 10 may check in advance whether the warning lamp is in a controllable state from the standard controller connected to the warning lamp. A state that satisfies such a pre-condition will be referred to as a "control ready state". In case of the control ready state, the VC 10 may transmit a corresponding signal ID and a state value thereof to the standard controllers.

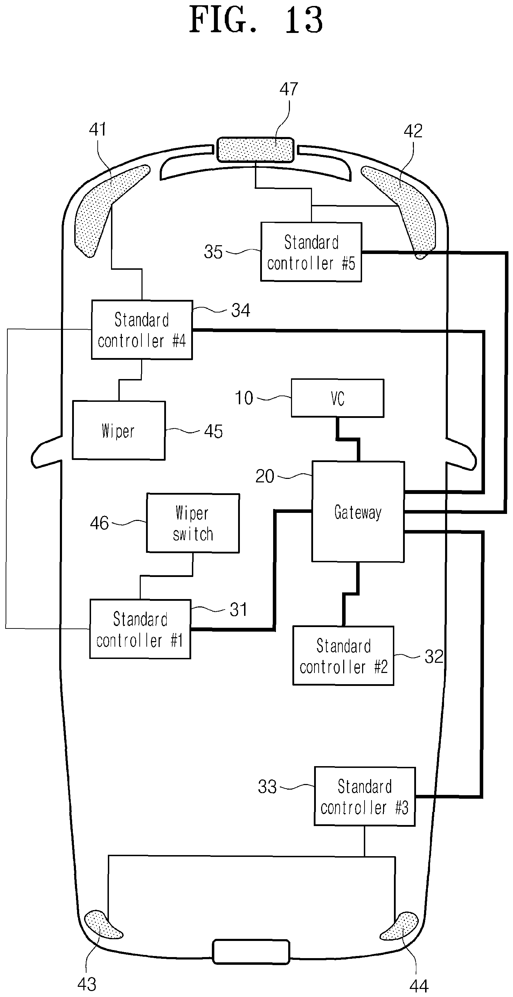

FIG. 13 is a diagram for describing function implementation using a standard controller according to the present disclosure.

FIG. 13 illustrates a case in which a warning lamp 47 and a standard controller #5 35 are added after completion of vehicle development. After the vehicle development is completed, an actuator, a sensor, a standard controller, or the like may be added.

As shown, the warning lamp 47 is added and the standard controller #5 35 is added. The warning lamp 42 connected to the existing standard controller #4 34 9FIG. 12) may be connected to the standard controller #5 35. In this case, as described above, a function may be flexibly provided in response to the addition and connection change of the component changed thorough the update (addition, change, deletion, etc.) of the function SW of the VC 10, the update of the signal DB of the related standard controller, etc.

A signal associated with the warning lamp 42 should be changed so that the "SC", "IC", and "PIN" parameters among the DB parameters are allocated to the standard controller #5 35, and the signal DB associated with the warning lamp 47 may be added or the signal of the existing warning lamp 42 may be commonly used. In addition, when the signal DB associated with the warning lamp 47 is added, a function related to an output of the warning lamp 47 may be added or updated to the function SW of the VC 10. When an output signal of the warning lamp 42 is commonly used by the warning lamp 47, the warning lamp 47 may be added only by changing output signal parameters SC, IC, and PIN of the warning lamp 42 of the signal DB without changing the function SW of the VC 10. Meanwhile, the standard controller #4 34 may determine that the corresponding signal is not allocated to itself because the "SC" parameter of the signal associated with the warning lamp 42 previously allocated to itself from the signal DB has been changed to the standard controller #5 35. The function related to the output of the warning lamp 42 may be maintained as it is in the function SW of the VC 10 according to the settings or may be changed according to the settings.

On the other hand, when outputting an output control signal, there is a need for a method capable of reducing inrush.

1. When power is applied, it may be driven to output by a PWM method in a section where voltage is increased to reduce inrush.

2. A PWM frequency and a time outputted as Duty and PWM according to the characteristics (such as the capacity of the input stage capacitor) of a component supplied with power are defined as signal DB parameters.

3. A power signal is set to Active as the value defined in the signal DB parameter.

In addition, if all the supplied powers are turned on in the standard controller at the same time, there is a need for a plan to reduce noise generation due to instantaneous current changes.

Accordingly, when each pin of a high current driver (IC) of the standard controller is sequentially turned on, noise generation may be suppressed.

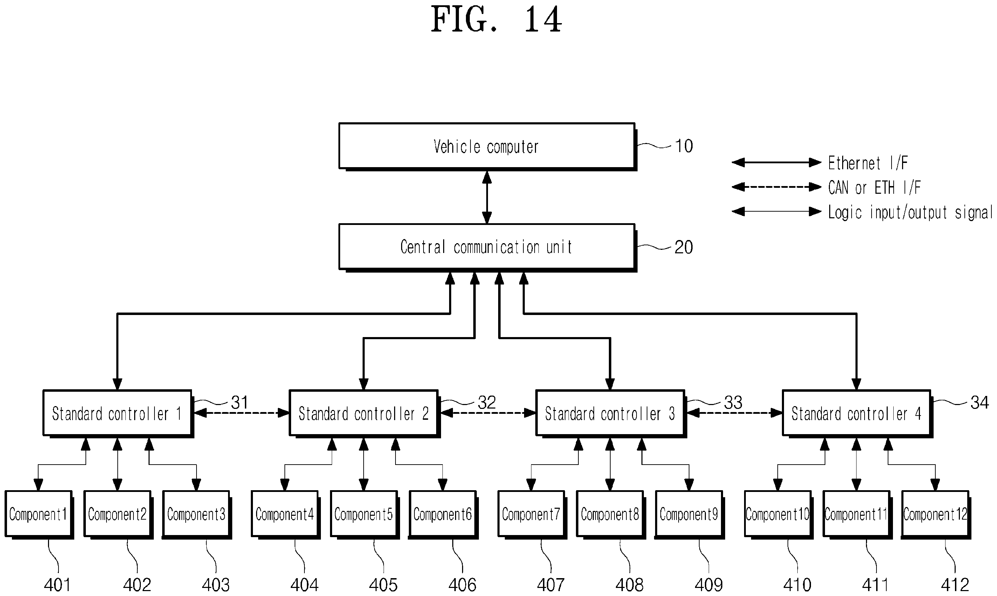

FIG. 14 illustrates a connection structure between a standard controller, a gateway controller, and a vehicle computer according to the present disclosure.

The related-art zonal architecture technology divides a vehicle into several zones (i.e., areas), determines the number of signals in the corresponding zone, specification information of each signal, etc., proceeds with the hardware development of a zone controller, and then proceeds with the software development, which took a lot of time for the development. In addition, delays in the development schedule occurred frequently because the hardware had to be modified when signals in the zone were added or signal specifications were changed during development.

Moreover, it is difficult to change the zone division once determined. For example, if it was necessary to divide into four zones at first, allocate 50 signals for each of the zones, and reduce it to three zones with the circuit design completed, the previously manufactured four zone controllers could not be reused, and all three zone controllers had to be newly manufactured.

The present disclosure standardizes all vehicle signals connected to a standard controller and unifies hardware and software for standardized vehicle signal processing, so that the same standard controller may be utilized irrespective a vehicle type, the number of zones, the number of signals, and signal specifications. Since a standard controller once developed is applicable to other vehicles without changing hardware or software, it is possible to shorten the development schedule because it does not require a separate reliability evaluation and only needs to proceed with the evaluation of the overall vehicle system.

A vehicle control system according to the present disclosure has a three-layer structure, and a standard controller is disposed on the lowest level. A standard controller consists of the same hardware and software as described above. To this end, information indicating that an input/output signal connected to the standard controller is a signal for a prescribed function is removed from the standard controller. That is, the standard controller does not recognize "function". Since information on a function is different for each signal, when function information is in the standard controller or connected to the standard controller, it is unable to unify hardware and software.

An input control signal of the standard controller is transmitted to a vehicle computer, which is a most upper layer, through a central communication unit (or gateway controller, CCU) that is an intermediate layer.

When the input control signal is received from the standard controller, the vehicle computer may recognize or assign function information on each input control signal.

The input control signal to which the function information is assigned is processed by the vehicle computer, and a corresponding result (i.e., an output control signal corresponding to the input control signal) is again transmitted to the relevant standard controller through the central communication unit. In this case, the output control signal before being outputted from the vehicle computer is transmitted without including function information.

The central communication unit transmits the received output control signal of the vehicle computer to all standard controllers, and the standard controller outputs an output control signal. The standard controller not related to the received output control signal stores only an output state value of the output control signal and performs no other operation.

The three-layer structure proposed in the present disclosure is a functional classification, and is not intended to be implemented by classifying controllers into three types on a physical basis.

If necessary, a controller in which a vehicle computer, which is a most upper layer, and a central communication unit, which is an intermediate layer, are integrated may be manufactured, but in terms of functionality, the controller is configured to have a separate structure.

The present technology has a structure in which a controller and a component (sensor/actuator, etc.) in a vehicle are connected according to a zone rather than a function.

A vehicle may be divided into several zones, and one standard controller may be configured in one zone. Input/output control signals of all components (sensors/actuators, etc.) included in the corresponding zone are transmitted to the standard controller configured in the corresponding zone irrespective of functions.

Each of the standard controllers 31, 32, 33, and 34 may share an input/output control signal and/or a state value (or a state value change) associated with a component connected thereto with the central communication unit 20, and the standard controllers may further share the corresponding information with each other. The central communication unit 20 may share the input/output control signal and/or the state value (or the state value change) of each of the standard controllers with the vehicle computer 10. As shown in FIG. 14, the standard controllers communicate with each other through CAN or Ethernet interface, the standard controllers and the central communication unit communicate through Ethernet interface, and the central communication unit and the vehicle computer may be configured to communicate through Ethernet interface.

On the contrary, the vehicle computer drives the function SW and transmits a corresponding result to the central communication unit, and the central communication unit transmits it to the standard controller. The standard controller processes or controls an output control signal according to the received result, but as described above, the standard controller does not know what function the output control signal is. Through this connection structure, it is possible to reduce the length/weight of a wiring harness in the vehicle, and by separating the input/output control signal transmitted between the standard controller and the vehicle computer and the function of the function SW of the vehicle computer, it is possible to flexibly respond to the update (add, change or remove) of components or functions.

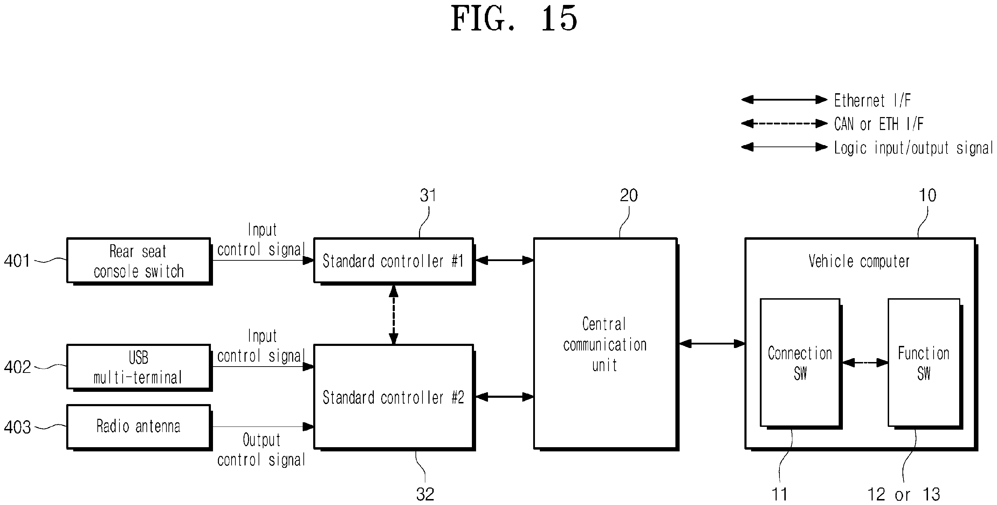

FIG. 15 is a diagram for describing a function using a component according to the present disclosure.

Specifically, a corresponding function relates to a function of changing an audio mode from FM radio to USB music mode through a rear seat console switch 401.

In a signal DB stored in a memory of a standard controller #1 31, a signal for detecting that the rear seat console switch 401 is pushed is defined. However, even if the standard controller #1 31 detects a signal according to the push of the rear seat console switch 401, it is not able to know that the signal represents the push of the rear seat console switch 401.

For example, the standard controller #1 31 may detect an electrical signal (e.g., a voltage level) from a switch detector IC connected to the rear seat console switch 401 and a pin thereof. When an electrical signal greater or smaller than or equal to a threshold is detected from a corresponding driver and pin defined in the signal DB, the standard controller #1 31 may transmit a corresponding signal ID and its state value (case of "Low", "Active Low") to the vehicle computer 10 through the central communication unit 20, and may additionally transmit the same directly to a standard controller #2 32.

In addition, a signal for controlling radio antenna power OFF is defined in a signal DB stored in a memory of the standard controller #2 32. However, even if the standard controller #2 32 detects a signal for controlling the radio antenna power OFF, it is unable to know that the signal indicates the radio antenna power OFF.

The vehicle computer 10 should process the signal ID and the state value received from the standard controller #1 31.

Prior to that, a connection SW 11 of the vehicle computer 10 will be described. The connection SW 11 has signal ID information of the input control signal received from the standard controller, information on which individual function the signal ID is for, and information on what the state value of the signal means in the individual function. Therefore, the connection SW 11 may convert the signal ID and the state value received from the standard controller into a function and meaning, and then transmit the corresponding information to the function SW that requires the same. However, the connection SW 11 is unable to know about an output control signal corresponding to the signal ID and the state value (i.e., the input control signal) received from the standard controller. The linkage information between the input control signal and the output control signal is owned or managed by the function SW 12 or 13.

The connection SW 11 identifies the functional meanings according to the signal ID and the state value received from the standard controller through the central communication unit and transmits the functional meanings to the function SW that provides the corresponding function, so that the function SW may provide the function. That is, the connection SW 11 may know at least the function SW related to the received signal ID and state value. The connection SW 11 may transmit the individual function and/or the meaning corresponding to the received signal ID and state value only to the related function SW, and receive a response thereto. Alternatively, each of the function SW 12/13 registers a required signal to the connection SW 11 in advance. When the state value of the corresponding signal is changed, the connection SW 11 may transmit it to the function SW 12 or 13.

Additionally, the connection SW 11 may receive a response (i.e., individual function) from the function SW, convert it into a signal ID and a state value thereof for an individual function corresponding to the received response, and transmit them to the standard controllers 31 and 32 through the central communication unit 20.

The connection SW 11 of the VC 10 recognizes the individual function from an input control signal including the received signal ID and state value thereof, and may check audio mode change information accordingly. The connection SW 11 may transmit, to the function SW 12/13, that the audio mode change information is received.

The function SW 12/13 may prepare an operation for the USB music mode according to the audio mode change information. In addition, the function SW 12/13 may check whether it is a control preparation ready state to execute the USB music mode. That is, the function SW 12/13 may check a connection signal state of a USB multi-terminal 402 connected to the standard controller #2 32. The connection signal state of the USB multi-terminal 402 may be provided from the standard controller #2 32, which may be transmitted as a signal in the form of a signal ID and a state value thereof. In addition, the connection SW 11 may recognize an individual function and/or meaning thereof from it and then transmit the corresponding result to the function SW 12/13.

After confirming a state in which a USB is connected, the function SW 12/13 may execute the USB music mode and switch to set a sound source to the USB. The function SW 12/13 may terminate an FM radio function and output a radio antenna power OFF command.

The connection SW 11 may obtain a signal ID of a signal corresponding to the radio antenna power OFF, obtain a state value (or a state value change, e.g., "Inactive") for the radio antenna power OFF, and transmit an output control signal including the signal ID and the state value (or the state value change) to the standard controller. The output control signal may be transmitted to both of the standard controller #1 31 and the standard controller #2 32 through the central communication unit 20.

Each of the standard controllers checks whether the received signal ID is a signal ID related to a component connected to the corresponding standard controller based on the signal DB stored in the memory.

The standard controller #1 31 ignores the received output control signal because it is not the signal ID related to the component connected to the standard controller #1 itself.

Since it is the signal ID connected to the standard controller #2 32, the standard controller #2 32 may change the state value of the corresponding signal to "Low" (for example, a case of "Active High") according to the received output control signal. In addition, the standard controller #2 32 may share the changed state value with all standard controllers. In addition, the standard controller #2 32 may also share the changed state value with the vehicle computer 10 or the function SW 12/13 through the central communication unit 20.

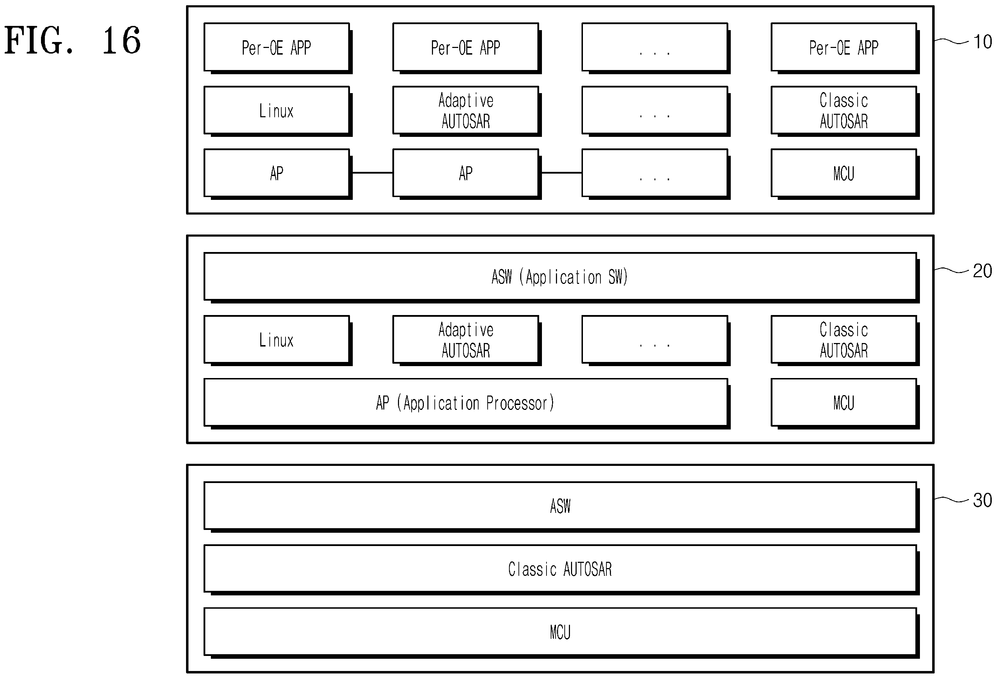

FIG. 16 shows a software structure for a vehicle control system according to the present disclosure. The vehicle control system according to the present disclosure has a three-layer structure, in which a vehicle computer 10 is disposed at a most upper layer, a central communication unit 20 is located at an intermediate layer, and a standard controller 30 is disposed at a most lower layer.

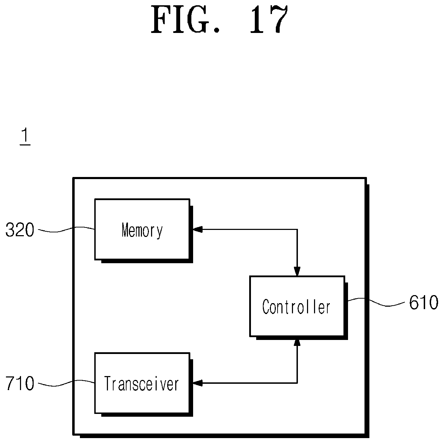

FIG. 17 is a block diagram illustrating a standard controller according to the present disclosure.

A standard controller 1 may be installed in one of a plurality of areas of a device.

The standard controller 1 may include a transceiver 710 configured to transmit and receive signals to and from a gateway controller or a central computer and a controller 610 configured to process the transmitted and received signals.

In addition, the standard controller 1 may include a memory 320 that stores a signal database.

The controller 610 may be configured to detect an input for a function related to a component connected thereto, generate and transmit an input control signal corresponding to the detected input. The generated input control signal may be transmitted to the gateway controller or other standard controller(s) of a device.

The controller 610 may be configured to detect an output control signal corresponding to an output for a function related to a component connected thereto and perform control corresponding to the output control signal.

The output control signal is generated by the central computer according to an input for a function related to a component connected to another standard controller, i.e., a third standard controller, of the device communicatively connected to the gateway controller, and may be received by the standard controller 1 through the gateway controller. Alternatively, the output control signal may be generated by the central computer according to an input for a function related to another component connected to the standard controller 1, and may be received by the standard controller 1 through the gateway controller.

For the contents related to the device 1 not described with reference to FIG. 17, the description related to FIGS. 3 to 16 may be referred to, and the contents may be applied to the device 1 of FIG. 17.

Meanwhile, as another embodiment of the present disclosure, a vehicle 1000 including the above-described device 1 is proposed.

In the above specification, "device" or "system" or each component included therein is described as performing control, but "device", "system" and components pertaining thereto are names only and the scope of rights is not subordinate thereto.

In other words, the proposed technology may be performed as a name other than a device, processor, or controller, and the method, mechanism and the like described above may be performed by software for vehicle control or function provision, or by codes readable by a computer or other machines, devices, and the like.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

Accordingly, the present disclosure is not intended to be limited to the embodiments shown herein but is to be accorded the widest scope consistent with the principles and novel features disclosed herein.

## Claims

1. A control system of a device having mobility, the control system comprising:
standard controllers, each configured to be installed in one of a plurality of areas of the device, detect an input for a function related to a component of the device having mobility connected thereto, generate or transmit an input control signal related to the detected input, detect an output control signal corresponding to an output for the function related to the component connected thereto, and control the component based on the output control signal;
a central computer configured to define the function and determine linkage between the input and the output to generate the output control signal corresponding to the input control signal for the function; and
a gateway controller configured to transfer the input control signal and the output control signal between each of the standard controllers and the central computer.

2. The control system of claim 1, wherein the central computer comprises a function database defining the function and wherein the function is defined as a combination or linkage between at least one input control signal and at least one output control signal corresponding to the input control signal.

3. The control system of claim 1 or 2, wherein the central computer is configured to recognize the function for the input control signal and generate an output control signal corresponding to the recognized function.

4. The control system of any one of claims 1 to 3, wherein each of the standard controllers comprises a memory configured to store a signal database consisting of signals for an individual function related to the component connected thereto.

5. The control system of any one of claims 1 to 4, wherein the signal is generated according to a standard signal structure, and
wherein the standard signal structure comprises a signal identifier (ID), an indicator indicating whether a signal is an input signal or an output signal, activation state information of the signal represented as Active High or Low, standard controller information or area information in the device, information on a connected driver or switch detector, and pin information on the connected driver or switch detector.

6. The control system of any one of claims 1 to 5, wherein each of the standard controllers detects an input for an individual function related to the component, and generates an input control signal corresponding to the detected input and transmits the generated input control signal to the gateway controller.

7. The control system of any one of claims 1 to 6, wherein each of the standard controllers is configured to detect an output control signal for an individual function related to the component and perform control for the component connected thereto according to the detected output control signal.

8. The control system of any one of claims 1 to 7, wherein the input control signal and the output control signal comprises a signal identifier (ID) and information on a state value or a state value change related to the component.

9. The control system of any one of claims 1 to 8, wherein the gateway controller is configured to transmit the output control signal for the function received from the central computer to all of the standard controllers.

10. The control system of any one of claims 1 to 9, wherein the standard controllers are connected to each other to enable 1-to-1 communication in between, wherein each of the standard controllers is connected to the gateway controller communicatively, and wherein the gateway controller is connected to the central computer communicatively.

11. A standard controller installed in one of a plurality of areas in a device, the standard controller comprising:
a transceiver configured to transceive a signal with a gateway controller or a central computer; and
a controller configured to process the transceived signal, the controller further configured to detect an input for a function related to a component connected thereto and generate or transmit an input control signal corresponding to the detected input, detect an output control signal corresponding to an output for the function related to the component connected thereto, and perform control corresponding to the output control signal,
wherein the output control signal is generated by the central computer according to an input for a function related to a component connected to a third standard controller communicatively connected to the gateway controller and received by the gateway controller.
